# EUROPEAN PATENT SPECIFICATION

(11) **EP 1 643 030 B1**
(45) Date of publication and mention of the grant of the patent: **27.06.2007**
(21) Application number: 05256125.5
(22) Date of filing: 30.09.2005
(51) Int. Cl.: D21C 9/00, D21C 9/14, D21C 9/147, D21C 9/16, C08B 16/00, C08L 1/02

(54) **Processes for making compositions for conversion to lyocell fibers**
Verfahren zur Herstellung von Zusammensetzungen für die Konvertierung zu Lyocell Fasern
Procédé de fabrication des compositions pour la transformation en fibres de lyocell

(30) Priority: 30.09.2004 US 956914
(43) Date of publication of application: 05.04.2006
(73) Proprietor: WEYERHAEUSER COMPANY, Federal Way, WA 98063-9777 (US)
(72) Inventor: Luo, Mengkui, Tacoma, Washington 98422 (US)
(74) Representative: Bayliss, Geoffrey Cyril

(56) References cited:
- US-A- 5 985 097
- US-A1- 2004 209 078
- US-B1- 6 210 801
- US-B1- 6 235 392
- US-B1- 6 331 354

## Description

The present invention provides methods for reducing the degree of polymerization of pulps without substantially reducing the hemicellulose content. The resultant pulp product has a low copper number and can be used to make lyocell fibers.

Lyocell fibers are typically made from highly processed pulp known as "high alpha" pulp that is mostly cellulose and has had much of the hemicellulose and lignin removed. The highly purified "alpha pulps" are expensive to manufacture. A common process known as "Kraft" is used widely for the production of a pulp that is lower in cellulose and higher in hemicellulose as compared with the "high alpha" pulps. The Kraft method of pulping is generally one of the most efficient of all pulping methods. However, it is believed that the relatively large amounts of hemicellulose that are retained in Kraft pulp renders the pulp unsuitable for use in lyocell manufacture. Recently, there have been a number of issued patents, assigned to the assignee of the present invention, which describe methods for producing pulps that are high in hemicellulose content, but have nevertheless been successfully spun into lyocell fibers. Such prior technology is centered on reducing the degree of polymerization (D.P.) of cellulose. Such reduction in degree of polymerization is thought to be responsible for the ability of the high hemicellulose pulp to fully dissolve in amine N-oxide solvents, and be spun into lyocell fibers.

Copper number represents the carbonyl content of pulp. It is generally believed that a high copper number will lead to degradation of the amine N-oxide solvent. Accordingly, to be useful for lyocell manufacture, pulp has to have a certain range of copper number. In U.S. Patent No. 6,210,801, methods are described that reduce the degree of polymerization of the cellulose of pulp without substantially reducing the hemicellulose content. These methods include treating the pulp with an acid or combination of acids; treating the pulp with steam; treating the pulp with a combination of ferrous sulfate and hydrogen peroxide; treating the pulp with a combination of a transition metal and peracetic acid; and treating the pulp with alkaline chlorine dioxide or with alkaline sodium hypochlorite. However, the ferrous sulfate is present at a concentration of from about 15000 ppm to 90000 ppm. The aforementioned methods require that a second, subsequent treatment be performed in order to reduce the copper number of the pulp to an acceptable level. In the '801 patent, the copper number is reduced by treating the pulp with sodium borohydride or sodium hydroxide, or by treating the pulp with one or more bleaching agents.

In U.S. Patent No. 6,331,354, methods are described that eliminated the need to have a subsequent treatment to lower the copper number after reducing the degree of polymerization of the cellulose. This alternate method lowered the degree of polymerization without substantially decreasing the hemicellulose content and also without substantially increasing the copper number. The method uses an oxygen reactor operated under alkaline conditions. An oxygen reactor is typically included after the brown stock washers and before the bleaching sequence, and is used to destroy or solubilize the colorant materials in pulp. The '354 patent describes conditions for operating an oxygen reactor to reduce the degree of polymerization of cellulose without substantially reducing the hemicellulose content or increasing the copper number.

Regardless of the advances made in reducing the degree of polymerization of cellulose in pulp, there are still opportunities to develop alternatives for reducing the degree of polymerization without substantially reducing the hemicellulose content and providing pulp with a suitable copper number. The present invention provides alternative strategies of reducing the degree of polymerization of high hemicellulose pulps that can be practiced in some existing pulp mills with bleaching sequences. The pulp mills are otherwise unable to produce pulp with a low degree of polymerization without having to increase the amounts of bleach chemicals and bleach temperature from the normal conditions.

A high pH process for reducing the degree of polymerization of a pulp having a hemicellulose content of at least 7%, is described. The high pH process is carried out at a pH greater than 8. The high pH process reduces the degree of polymerization without substantially increasing the copper number. The process can be practiced in pulp mills with a bleaching sequence having one or more E or D stages. At the end of the bleach sequence, a pulp having a degree of polymerization of 200 to 1100, a copper number of less than 2, and a hemicellulose content of at least 7% is provided. The pulp can be used to make lyocell fibers.

The present invention can produce pulps of low degree of polymerization in an existing pulp mill's bleaching sequence without a substantial adjustment to the amounts of chemicals and temperatures normally used.

The foregoing aspects and many of the attendant advantages of this invention will become more readily appreciated as the same become better understood by reference to the following detailed description, when taken in conjunction with the accompanying drawings, wherein:
FIGURE 1 is a schematic diagram of a bleach sequence process according to the invention;
FIGURE 2 is a schematic diagram of an alternate bleach sequence process according to the invention; and
FIGURE 3 is a schematic diagram of a process to make lyocell fibers.

Much of the chemical pulp being produced by the Kraft process is put through a bleaching sequence for the removal of the colorant components in pulp. The bleaching sequence can comprise one or more bleach stages that are designated by the letters C, E, H, D, P, and O. Each stage refers to the specific chemical used in the bleaching of pulp. There are, of course, almost infinite variations of temperature, chemical dosage, pressure, and pulp consistency that can be used at each stage of bleaching. A thorough discussion of bleaching chemistry is not necessary here, however, reference is made to the "Handbook of Pulping and Papermaking" by Christopher S. Biermann. A consequence of bleaching pulp is a concurrent degradation of cellulose. Degradation of cellulose outside the context of the prior patents described in the background section, related patents and applications, and the present application is disadvantageous because it leads to a decrease in pulp strength. However, while some prior art teaches the prevention of the degradation of cellulose during bleaching (see, for example, Samuelsson, U.S. Patent No. 5,985,097), the present invention seeks to accelerate the degradation of cellulose with a catalyst in one or more stages of bleaching or between stages to produce pulps that are suitable for lyocell manufacture. With the addition of a catalyst in a bleaching stage or interstage between stages, the overall bleach sequence process according to the invention lowers the degree of polymerization of the cellulose in pulp to within the range of 200 to 1100, without significantly reducing the hemicellulose content of the pulp. The copper number is adjusted to be less than 2, either concurrently with the reduction in the degree of polymerization or subsequent to the reduction in the degree of polymerization. The process according to the invention can be practiced in pulp mills with bleach sequences that normally produce high hemicellulose pulps that are otherwise unsuitable for lyocell manufacture. The process according to the invention can render the pulps useful for lyocell manufacture.

The process according to the present invention can be practiced in bleach sequences having a D stage using chlorine dioxide and an E stage or extraction stage using sodium hydroxide and hydrogen peroxide. Because some of the current bleach sequence conditions in existing bleach plants are too mild to reduce the degree of polymerization of cellulose to the range of 200 to 1100, a catalyst is added to a bleach stage or interstage between stages in the bleach sequence to increase the overall reduction of the degree of polymerization of cellulose. It is to be appreciated that while hydrogen peroxide is the preferred chemical for use in the E stage, other oxidants can be used. Similarly, while sodium hydroxide is the preferred chemical for use in the E stage other alkali chemicals can be used. Furthermore, while each stage of bleaching generally is carried out in a single bleaching tower devoted to one stage of bleaching, it is possible to practice the invention in one or more bleaching towers, where more than one stage of bleaching can be carried out in a single bleaching tower or where one stage can be practiced in one or more towers.

Chemical pulp, such as Kraft pulp, after it has been washed in brownstock washers, is normally "bleached" to remove the colorant components found in the pulp. Brownstock pulp that has been chemically digested according to the Kraft process under alkaline conditions, and has not had an acidic prehydrolysis treatment, will contain an amount of hemicellulose that is at least 7% by weight as measured by a sugar content assay based on a proprietary Weyerhaeuser sugar content assay (AM W-LC-wood pulp). The reduction in the degree of polymerization takes place without substantially reducing the hemicellulose content of the pulp. Throughout this application, the phrase, "without substantially reducing the hemicellulose content" means without reducing the hemicellulose content by more than 50%, preferably not more than 15%, and most preferably not more than 5% during the D.P. reduction step.

According to the present invention, a catalyst to reduce the degree of polymerization of the cellulose of a pulp is provided in an E stage, or before an E stage but after a D stage, or before both a D and an E stage. According to the present invention, there is a high pH process for the reduction of the degree of polymerization.

The reduction of the degree of polymerization of cellulose of a pulp can occur at a pH greater than 8. When the reduction in degree of polymerization takes place at a high pH of greater than 8, there is no need to perform a subsequent alkali treatment to reduce the copper number to less than 2. The high pH process to reduce the degree of polymerization of cellulose takes place both without substantially decreasing the hemicellulose content and also without substantially increasing the copper number. Throughout this application, the phrase "without substantially increasing the copper number," means without increasing the copper number by more than 100%, preferably not more than 50%, and most preferably not more than 25% during reducing the degree of polymerization. Copper number is measured by Weyerhaeuser method AM W-PPD-3. A useful copper number range of pulp produced by the process according to the invention is less than or about 2. Sodium hydroxide in an amount of about 1.5% based on the weight of the pulp weight is added to reduce the copper number of pulp to less than 2. The high pH process is suited to reduce the degree of polymerization of cellulose when the starting degree of polymerization of cellulose of a pulp is about 1050, or less. Reduction of the degree of polymerization at a pH greater than 8 will result in about a 20% to 40% reduction of degree of polymerization from the starting value. In contrast reduction of the degree of polymerization at a pH of 2 to 8 will result in about a 10% to about 20 % reduction in degree of polymerization from the starting value. Degree of polymerization is measured using ASTM Test D 1795.

According to one embodiment of the present invention, in a high pH process of pH greater than 8, a catalyst is added in an Ep stage to reduce the degree of polymerization of cellulose. An Ep stage is a hydrogen peroxide reinforced extraction stage using sodium hydroxide. A catalyst useful in the present invention provides transition metal ions that catalyze the reduction of degree of polymerization of cellulose. Such catalyst includes a transition metal having a positive oxidation state or cation, such as: Fe(II), Fe(III), Mn(II), Cu(II), Cu(I), Co(II), Co(III), Ni(II). Of these, the preferred catalysts are iron and copper cations: Fe(II), Fe(III), Cu(II). Catalysts also include any of the salts of the aforementioned metal ion species, and any combinations thereof

According to one embodiment of the present invention, in a high pH process of at least a pH of 8, a catalyst, hydrogen peroxide and sodium hydroxide are added to an E stage. In any one of the E stages used to reduce the degree of polymerization, an effective amount of catalyst is in the range of 0.1 ppm to 30 ppm based on the weight of pulp. An effective amount of hydrogen peroxide is 1% to 3% based on the weight of pulp. An effective amount of sodium hydroxide is 1% to 4% based on the weight of pulp. Sodium hydroxide is used to provide the perhydroxyl ion and to maintain the pH above a value of 8. The temperature of the Ep stage is 75°C to 90°C. At a high pH of greater than 8, the stage will lower the degree of polymerization of cellulose without substantially increasing the copper number.

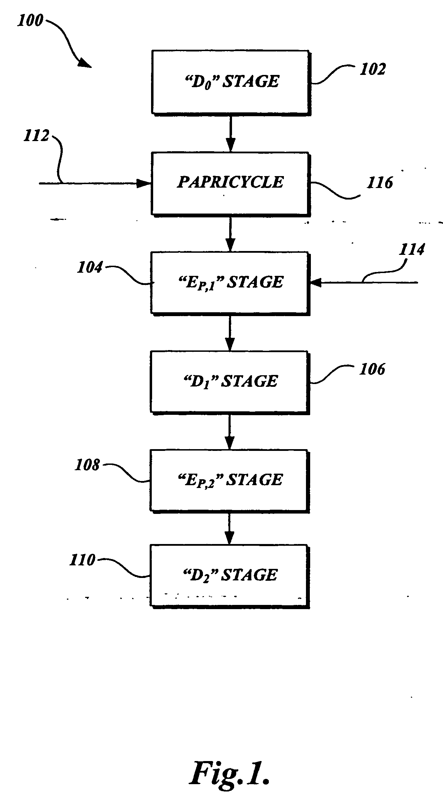

Referring to FIGURE 1, a representative bleach sequence is provided which includes a D₀ stage (block 102), E_{P,1} stage (block 104), D₁ stage (block 106), E_{P,2} stage (block 108), and a D₂ stage (block 110). For a high pH, degree of polymerization reduction, the catalyst may be added at either the first or second E_{P} stage. Shown in FIGURE 1, is addition of a catalyst 114 in the first E stage, block 104. It may be advantageous to carry out the reduction of the degree of polymerization in the E_{P,1} stage, and the E_{P,2} stage can be used for further adjustment of the degree of polymerization, if necessary. Carrying out the bleach process depicted in FIGURE 1, with the addition of a catalyst before or in at least one E stage will result in a pulp having a degree of polymerization of 200 to 1100, a hemicellulose content of at least 7%, and a copper number of less than 2.

An advantage of the present invention is that the use of a catalyst can reduce the degree of polymerization of cellulose of a pulp without any substantial adjustment to the normal rates of chemicals or temperatures normally used in the bleach stages. In some instances, the use of bleaching chemicals may be reduced from the normal amounts with the use of a catalyst. The typical operating conditions of the bleach sequence of FIGURE 1, are provided below.

In the first D₀ stage, block 102, the pulp consistency is adjusted to about 10% with the addition of water. Chlorine dioxide corresponding to an amount of 0.5 to 1.5% weight based on the weight of the pulp, is added. The mixture is held at a temperature from 65°C to 75°C for 40 to 90 minutes.

In the papricycle stage, block 116, sodium hydroxide is added at 0.5% to 1.5% based on the weight of the pulp. The temperature is 60°C to 80°C, and the duration is 15 to 60 minutes.

In the first E_{P,1} stage, block 104, the pulp consistency is maintained at about 10% with the addition of water. Sodium hydroxide is charged to the stage in an amount of 1.5% to 3% based on the weight of the pulp. Hydrogen peroxide is charged to the stage in an amount of 1% to 3% based on the weight of the pulp. The temperature is 75°C to about 90°C. The stage duration is 50 to 90 minutes.

In the second D₁ stage, block 106, chlorine dioxide is added in an amount of 0.5% to 1.5% based on the weight of the pulp, and the pulp was again diluted to bring the consistency to about 10%. The temperature is 70°C to 85°C. The stage duration is 60 to 90 minutes.

In the second E_{P,2} stage, block 108, sodium hydroxide is charged to the stage with water being added to achieve a consistency of about 10%. The sodium hydroxide charge is 1.5% to 3.5% based on the weight of the pulp. Hydrogen peroxide is also charged in an amount of 1% to 3% based on the weight of the pulp. The temperature is 80°C to 90°C. The stage duration is 50 to 90 minutes.

In the second D₂ stage, block 110, chlorine dioxide is charged at 0.3% to % based on the weight of the pulp. The temperature is 70°C to 85°C. The stage duration is 60 to 90 minutes.

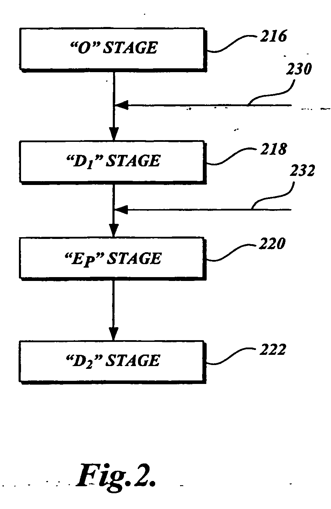

Referring to FIGURE 2, another representative bleach sequence according to the present invention is provided. The bleach sequence includes an O stage (block 216), D₁ stage (block 218), E_{P} stage (block 220), and a D₂ stage (block 222). Bleach sequences having a single E stage can use the high pH process for reduction of degree of polymerization.

In one embodiment, using high pH, degree of polymerization reduction, the catalyst, hydrogen peroxide, and sodium hydroxide is added to the single E_{P} stage, block 220, which reduces the degree of polymerization of cellulose, without substantially increasing the copper number and without substantially reducing the hemicellulose content.

An advantage of the present invention is that the use of a catalyst can reduce the degree of polymerization of cellulose of pulp without any substantial adjustment to the normal rates of chemicals or stage temperatures. In some instances, the use of bleaching chemicals may be reduced from the normal amounts with the use of a catalyst. The typical operating conditions of the bleach sequence of FIGURE 2, are provided below.

The first stage of bleaching is an O stage, block 216. The O stage comprises bleaching with oxygen. Oxygen bleaching is bleaching with oxygen under pressure. Oxygen is considered to be less specific for the removal of colorant components than the chlorine compounds. Oxygen bleaching takes place in an oxygen reactor. The reactor can operate at a high consistency, wherein the consistency of the feedstream to the reactor is greater than 20% or it can operate at medium consistency, where the medium consistency ranges between 8% up to 20%. Preferably, if a high consistency oxygen reactor is used, the oxygen pressure can reach the maximum pressure rating for the reactor, but more preferably is greater than 0 to 0.6 MPa (0 to 85 psig). In medium consistency reactors, the oxygen can be present in an amount ranging from greater than 0 to 50 g/kg (greater than 0 to 100 pounds per ton) of the pulp, but is more preferably 25 to 40 g/kg (50 to 80 pounds per ton) of pulp. The temperature of the O stage ranges from 100°C to 140°C.

The D₁ stage, block 218, comprises bleaching the pulp coming from the oxygen reactor with chlorine dioxide. The amount of chlorine dioxide used in this stage ranges from 0.5% to 1.5% based on the weight of the pulp. The temperature of the D₁ stage ranges from 70°C to 100°C. The stage duration is 60 to 90 minutes.

The Ep stage, block 220, is the hydrogen peroxide reinforced extraction stage where the pulp is treated using sodium hydroxide in an amount ranging from 1.5% to 5% based on the weight of the pulp. The amount of hydrogen peroxide ranges from 1.5% to 3% based on the weight of the pulp. The temperature of the Ep stage ranges from 80°C to 95°C. The stage duration is 60 to 90 minutes.

In one embodiment, the second D₂ stage, block 222, follows the E_{P} stage, block 220. The amount of chlorine dioxide used in this stage ranges from 0.5% to 1.5% based on the weight of the pulp. The temperature of the D₂ stage ranges from 70°C to 90°C. The stage duration is 60 to 90 minutes.

According to the present invention, any of the aforementioned schemes for reducing the degree of polymerization of cellulose results in a pulp having a degree of polymerization of cellulose of 200 to 1100, a copper number of less than 2, a hemicellulose content of at least 7%.

A typical mill will have undesired metals, such as magnesium and calcium in the water, which can be introduced into the pulp. Magnesium and calcium compounds may have a deactivating effect on the catalyst. Ca(II) and Mg(II) ion species in water were discovered to deactivate the catalyst and prevent cellulose degradation. The metals can be removed by the addition of a chelating agent with the catalyst in or before any of the D or E stages. Suitable chelating agents, include, but are not limited to aminopolycarboxylic acids (APCA), ethylenediaminetetraacetic acid (EDTA), diethylene triamine pentaacetic acid (DTPA), nitrilotriacetic acid (NTA), phosphonic acids, ethylenediaminetetramethylene-phosphonic acid (EDTMP), diethylenetriaminepentamethylenephosphonic acid (DTPMP), nitrilotrimethylenephosphonic acid (NTMP), polycarboxylic acids, gluconates, citrates, polyacrylates, and polyaspartates or any combination thereof. A chelating agent may be added in an amount up to 0.1 % by weight based on the weight of the pulp. In addition to the chelating agents, the pulp may be washed under acidic conditions to remove the normally occurring metals before or after the process to reduce the degree of polymerization. In bleach sequences having a D stage as the last stage of the bleach sequence, the D stage can wash out the normally occurring metals and catalysts.

The present invention therefore provides a pulp useful for lyocell manufacture that has a degree of polymerization in the range of 200 to 1100, at least 7% hemicellulose by weight, and a copper number that is less than 2. The pulp can also have total transition metals (iron, manganese, copper, cobalt and nickel) content of less than 25 ppm. Transition metals are measured using Weyerhaeuser method AM T-266M/E 6010. Pulps treated in accordance with the invention also exhibit a low ΔR (hereinafter Delta R), which is the differential between R₁₀ and R₁₈. R₁₀ refers to the residual undissolved material that is left after attempting to dissolve the pulp in a 10% caustic solution. R₁₈ refers to the residual amount of undissolved material left after attempting to dissolve the pulp in an 18% caustic solution. R₁₀ and R₁₈ are measured using Weyerhaeuser method AM T-235.

The pulp treated in accordance with the present invention can be dissolved in a solvent and spun into lyocell fibers by meltblowing, centrifugally spinning, or spunbounding a solution of cellulose as described in U.S. Patent No. 6,235,392. Alternatively, a dope produced by the pulp made in accordance with the present invention can be spun in any conventional manner used for high alpha pulps

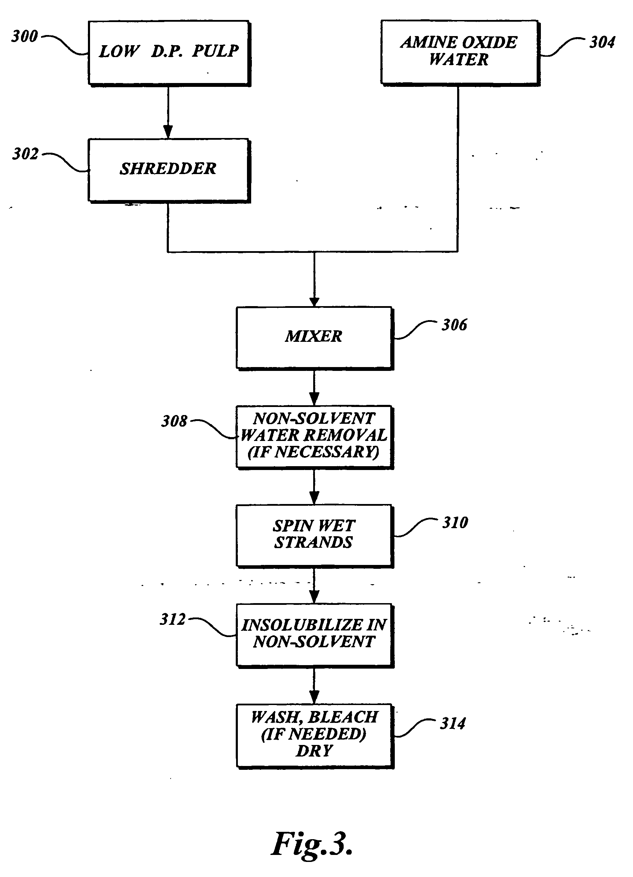

FIGURE 3 shows a block diagram of one embodiment of a method for forming lyocell fibers from the pulps made according to the present invention. Starting with pulp that has had the D.P. reduced in block 300, the pulp is physically broken down, for example by a shredder in block 302. The pulp is dissolved with an amine oxide-water mixture to form a dope, block 304. The pulp can be wetted with a non-solvent mixture of about 40% NMMO and 60% water. The mixture can be mixed in a double arm sigma blade mixer and sufficient water distilled off to leave about 12-14% based on NMMO so that a cellulose solution is formed, block 306. Alternatively, NMMO of appropriate water content may be used initially to eliminate the need for the vacuum distillation block 308. This is a convenient way to prepare spinning dopes in the laboratory where commercially available NMMO of about 40-60% concentration can be mixed with laboratory reagent NMMO having only about 3% water to produce a cellulose solvent having 7-15% water. Moisture normally present in the pulp should be accounted for in adjusting the water present in the solvent. Reference is made to articles by Chanzy, H., and A. Peguy, Journal of Polymer Science, Polymer Physics Ed. 18:1137-1144 (1980), and Navard, P., and J.M. Haudin, British Polymer Journal, p. 174 (Dec. 1980) for laboratory preparation of cellulose dopes in NMMO and water solvents. A third alternative for making dope, is to mix the pulp with water, followed by dewatering the pulp, and then dissolving the pulp with NMMO.

The dissolved, bleached pulp (now called the dope) is forced through extrusion orifices in a process called spinning, block 310, to produce cellulose filaments that are then regenerated with a non-solvent, block 312. Spinning to form lyocell-molded bodies, including fibers, films, and nonwovens, may involve meltblowing, centrifugal spinning, spun bonding, and dry-jet wet techniques. Finally, the lyocell filaments or fibers are washed, block 314.

### EXAMPLE A

### REDUCTION OF DEGREE OF POLYMERIZATION AT HIGH PH WITH A CATALYST

Once dried pulp (NB416 fluff pulp available from the Weyerhaeuser Co. of Federal Way, WA) now having a consistency of 10% was mixed with 1.5% NaOH (based on pulp weight) and 1.5% H₂O₂ (based on pulp weight) in a container and bleached at 90°C for one hour in a lab. A catalyst was added to increase the reduction of degree of polymerization of cellulose. A control sample has a degree of polymerization of 1310. The results are summarized in Table 1.

**TABLE 1: CATALYSTS FOR H₂O₂ BLEACHING OF PULP**

| Pulp | Catalyst | Catalyst in water (ppm) | D.P. (post treatment) | D.P. drop (%) |
|---|---|---|---|---|
| NB416-dry | None | | 1310 | |
| NB416-dry | Water/H₂O₂/NaOH | none | 1165 | 11 |
| NB416-dry | FeCl₂.4H₂O | 13.6 | 1015 | 23 |
| NB416-dry | FeCl₃.6H₂O | 11.2 | 894 | 32 |
| NB416-dry | MnCl₂.3H₂O | 13.5 | 1241 | 5 |
| NB416-dry | MnCl₂ | 11.2 | 1242 | 5 |

### EXAMPLE B

### REDUCTION OF DEGREE OF POLYMERIZATION AT HIGH PH WITH A CATALYST

Never dried pulp from the Weyerhaeuser Company's Kamloops mill from the D₁ stage having a consistency of 10% was mixed with NaOH and H₂O₂ in a container and bleached 90°C for one hour in a lab. Sodium hydroxide was added at the rate of 1.5%, and hydrogen peroxide was added at the rate of 1.5%, where percent is based on the weight of the pulp, unless otherwise indicated. A catalyst was added to catalyze the reduction of degree of polymerization of cellulose. The pH was greater than 8. A control sample has a degree of polymerization of 939. Some of the samples were washed with deionized (DI) water prior to bleaching. The results are summarized in Table 2.

**TABLE 2: CATALYST EFFECTIVENESS FOR BLEACHING OF MILL SAMPLES**

| Pulp | Catalyst | Catalyst in water (ppm) | D.P./copper number (post treatment) | D.P. drop (%) |
|---|---|---|---|---|
| Kamloops D1 | None | | 939 | |
| Kamloops D1 | Water/H₂O₂/NaOH | 0 | 781 | 17 |
| Kamloops D1 | Double H₂O₂ | 0 | 698/0.8 | 26 |
| Kamloops D1 | FeCl₃.6H₂O | 13 | 694/0.8 | 26 |
| Kamloops D1 | FeCl₃.6H₂O | 3 | 754 | 20 |
| Kamloops D1 | MnCl₂ | 27 | 895 | 5 |
| Kamloops D1 | MnCl₂ | 13.5 | 876 | 7 |
| Kamloops D1 | MnCl₂ | 3 | 884 | 6 |
| Kamloops D1 | FeCl₃.6H₂O/MnCl₂ | 3/80 | 911 | 3 |
| Kamloops D1 | FeCl₃.6H₂O/MnCl₂ | 9/40 | 886 | 6 |
| Kamloops D1 | FeCl₃.6H₂O/MnCl₂ | 6/60 | 903 | 4 |
| Kamloops D1 | CuCl₂.2H₂O* | 12 | 664/1 | 29 |
| Kamloops D1 | CuCo₃Cu(OH)₂* | 12 | 670/0.9 | 29 |
| Kamloops D1 | CuSO₃* | 12 | 655/0.9 | 30 |
| Kamloops D1 | COCO₃* | 12 | 811/0.6 | 14 |
| *1.1% NaOH and 1.5% H₂O₂ based on pulp weight. | | | | |
| Kamloops D1 (lab DI water washed) | FeCl₃.6H₂O | 8 | 767/0.8 | 18 |
| Kamloops D1 (lab DI water washed) | MnCl₂ | 7 | 895 | 5 |
| Kamloops D1 (lab DI water washed) | FeCl₃.6H₂O/MnCl₂ | 7/7 | 895 | 5 |
| Kamloops D1 (lab DI water washed) | Water/H₂O₂/NaOH* | 0 | 629 | 33 |
| Kamloops D1 (no wash) | Water/H₂O₂/NaOH* | 0 | 686/0.9 | 27 |
| *Comparative bleaching under the following chemical amounts: 1.5% NaOH and 3.0% H₂O₂ based on pulp weight. | | | | |

These results indicate that 3 ppm Fe (III) can enhance hydrogen peroxide bleaching. Adding 12-13 ppm of Cu (II) or Fe (III) can lead to decreases of one-half or more of hydrogen peroxide and still provide about the same reduction in D.P. as with hydrogen peroxide alone. Accordingly, less bleaching agent is used. Mn (II) is not as effective as Cu (II) or Fe (III), and a mixture of Mn (II) and Fe (III) are also not as effective. CO(II) is not very effective. Kamloops D₁ pulp is more resistant to bleaching than is Kamloops D₁ pulp washed with DI water.

### EXAMPLE C

### REDUCTION OF DEGREE OF POLYMERIZATION AT HIGH PH WITH A CATALYST

Never dried pulp (centrifuged Kamloops D₁ pulp) having a consistency of 10% was mixed with 1.0% NaOH (based on pulp weight) and 2.0% H₂O₂ (based on pulp weight) in a container and bleached at 88°C for one hour in a lab. The pH was greater than 8. A catalyst was added to increase the reduction of degree of polymerization of cellulose. A control sample has a degree of polymerization of 939. The transition metals Ca and Mg that are normally present in the mill are simulated by adding water containing low concentrations of these elemental transition metals. The results are summarized in Table 3.

**TABLE 3: MILL WATER IMPACT ON BLEACHING**

| Pulp | Catalyst | Catalyst in water (ppm) | D.P./copper number (post-treatment) | Comment | Cu/Fe in final product |
|---|---|---|---|---|---|
| Kamloops D1 | None | | 939 | | |
| Kamloops D1 | Water/H₂O₂/NaOH | 0 | 789 | 1.0% H₂O₂ on pulp | 10 |
| Kamloops D1 | Water/H₂O₂/NaOH | 0 | 711/0.8 | | 6/4 |
| Kamloops D1 | Water/H₂O₂/NaOH | Water* | 939 | 13 ppm Ca/ 3 ppm Mg/ 0.3 ppm Mn in water | |
| Kamloops D1 | CuSO₃ | 6 | 587 | | 32 |
| Kamloops D1 | CuSO₃ | 6/water* | 939 | 13 ppm Ca/ 3 ppm Mg/ 0.3 ppm Mn in water | |
| Kamloops D1 | CuSO₃/EDTA | 6/1 kg/ton | 616 | | 17 |
| Kamloops D1 | FeCl₃.6H₂O | 6 | 681 | | |
| Kamloops D1 | FeCl₃.6H₂O | 6/water* | 939 | 13 ppm Ca/ 3 ppm Mg/ 0.3 ppm Mn in water | |
| Kamloops D1 | FeCl₃.6H₂O/EDTA | 6/1 kg/ton | 704 | | 8/6 |
| *simulated mill water made in lab with elemental metals | | | | | |

These results indicate that Cu (II) is a better catalyst than Fe (III). A chelating agent, such as EDTA, can be added with the catalyst to lower the degree of polymerization and simultaneously chelate transition metals. Ca and Mg in water can deactivate the catalysts and prevent cellulose degradation.

### EXAMPLE D

### REDUCTION OF DEGREE OF POLYMERIZATION AT HIGH PH WITH A CATALYST

Never dried pulp (Kamloops D₁ pulp) having a consistency of 10% was mixed with 1.5% NaOH (based on pulp weight) and 2.3% H₂O₂ (based on pulp weight) in a container and bleached at 88°C for one hour. The pH was high at greater than 8. A catalyst was added to increase the reduction of degree of polymerization of cellulose. A control sample has a degree of polymerization of 718 and a copper number of 0.8.. The results are summarized in Table 4.

**TABLE 4: OTHER CATALYSTS FOR BLEACHING**

| Pulp | Catalyst | Catalyst in water (ppm) | D.P./copper number (post treatment) | Comment |
|---|---|---|---|---|
| Kamloops D1 | None | | 939 | |
| Kamloops D1 | Water/H₂O₂/NaOH | 0 | 718/0.8 | Control |
| Kamloops D1 | Fe(II) D-gluconate dehydrate | 10 | 628 | |

These results indicate that mill pulp can be degraded to very low D.P. with a Fe(II) catalyst.

### EXAMPLE E

### REDUCTION OF DEGREE OF POLYMERIZATION AT HIGH PH WITH A CATALYST

Never dried pulp (Flint River mill fluff pulp from D₁ stage) was optionally adjusted to a pH of 2.0 using H₂SO₄ and EDTA at 1 kg/ton pulp and mixed for 15 minutes at 50°C. After filtering, pulp having a consistency of 10% is mixed with tap water and 2.4% NaOH (based on pulp weight) and 3.4% H₂O₂ (based on pulp weight) in a container and bleached in bath at 88°C for 1.0 hour in a lab. A catalyst was added to increase the reduction of degree of polymerization of cellulose. The pH was greater than 8. A control sample has a degree of polymerization of 1052 and a copper number of 0.6. The results are summarized in Table 5.

**TABLE 5: USING THE CATALYSTS FOR BLEACHING FLUFF MILL PULP**

| Treatment | EDTA/ H₂SO₄ treatment | Catalyst | Catalyst in water, ppm | EDTA* (kg/ton) | D.P. | Copper number |
|---|---|---|---|---|---|---|
| Control | Yes | No bleaching | | 1 | 1052 | 0.6 |
| Treated | Yes | Bleached | 0 | 1 | 862 | 0.9 |
| Treated | Yes | Fe(III)Cl₃ hydrate | 15 | 1 | 842 | 0.9 |
| Treated | Yes | Cu(II)SO₄ hydrate | 15 | 1 | 755 | 1.1 |
| Treated* | No | Cu(II)SO₄ hydrate | 6 | 0 | 769 | 1.6 |
| Treated** | No | Cu(II)SO₄ hydrate | 6 | 0 | 1006 | 0.7 |
| Treated* | No | Cu(II)SO₄ hydrate | 3 | 0 | 737 | 1.6 |
| Treated* | No | Co(II)(OH)2 hydrate | 3 | 0 | 909 | |
| Treated* | No | Fe(III)Cl₃ hydrate | 3 | 0 | 940 | |
| * 0.75% NaOH and 2.3% H₂O₂ were used for bleaching. | | | | | | |
| ** 1.5% NaOH and 2.3% of H₂O₂ were used for bleaching. | | | | | | |

These results indicate that a fluff grade pulp can be degraded with a catalyst, such as Cu(II) to a D.P. range that is suitable for lyocell applications. An EDTA pretreatment can lower the metals. If pH is high during D.P. reduction (greater than 8) then post addition of sodium hydroxide is not required to control copper number. Reduction of D.P. takes place without substantially increasing the copper number.

### EXAMPLE F

### REDUCTION OF DEGREE OF POLYMERIZATION AT HIGH PH WITH A CATALYST

Never dried pulp (Flint River D₁ pulp) was used for making low D.P. pulp in a lab. The amounts of NaOH and H₂O₂ used are provided in Table 6. A catalyst was added to increase the reduction of degree of polymerization of cellulose. The pH was greater than 8. A control sample has a degree of polymerization of 1272 and a copper number of 0.6..

**TABLE 6: USING THE CATALYST FOR BLEACHING FLUFF MILL PULP**

| Treatment | NaOH/H₂O₂ (lb/lb) | Catalyst | Catalyst in water, ppm | Final pH (Eop) | D.P. (post treatment) | Copper number |
|---|---|---|---|---|---|---|
| Control | | | | | 1272 | 0.6 |
| Treated | 11/51 | Cu(II)SO₄ hydrate | 3.3 | 6.3 | 886 | 1.4 |
| Treated | 10/50 | Cu(II)SO₄ hydrate | 2.3 | 4.2 | 730 | 2.2 |

High pH, degree of polymerization reduction did not work well due to high copper number. Too much D.P. reduction in one stage will generate pulp with high copper number.

## Claims

1. A process for making a composition for conversion to lyocell fiber, said process comprising:
contacting a pulp comprising cellulose and at least 7% hemicellulose with an oxidant and a catalyst for catalyzing the reduction of the degree of polymerization of cellulose for a period of time sufficient to reduce the average degree of polymerization of the cellulose at a pH greater than 8, the process occurring without substantially reducing the hemicellulose content of the pulp and without substantially increasing the copper number of the pulp.

2. A process as claimed in claim 1, wherein the catalyst comprises a metal ion from at least one of Fe(II), Fe(III), Mn(II), Cu(II), Cu(I), Co(II), Co(III), Ni(II), the salts thereof, or any combination thereof.

3. A process as claimed in claim 1 or claim 2, wherein the amount of oxidant is 1% to 4% based on the weight of the pulp.

4. A process as claimed in any of claims 1 to 3, wherein the temperature during the reduction of D.P. is 50°C to 100°C.

5. A process as claimed in any of claims 1 to 4, further comprising adding a chelating agent.

6. A process as claimed in claim 5, wherein the chelating agent is at least one of aminopolycarboxylic acid (APCA), ethylenediaminetetraacetic acid (EDTA), diethylene triamine pentaacetic acid (DTPA), nitrilotriacetic acid (NTA), phosphonic acid, ethylenediaminetetramethylene-phosphonic acid (EDTMP), diethylenetriaminepentamethylenephosphonic acid (DTPMP), nitrilotrimethylenephosphonic acid (NTMP), a polycarboxylic acid, a gluconate, a citrate, a polyacrylate, a polyaspartate or any combination thereof.

7. A process as claimed in claim 5 or claim 6, wherein the amount of chelating agent is about 0.1% based on the weight of the pulp.

8. A process as claimed in any of claims 1 to 7, wherein the reduction in degree of polymerization is 20% to 40%.

9. A process as claimed in any of claims 1 to 8, wherein the period of time is at least 60 minutes.

10. A process as claimed in any of claims 1 to 9, wherein the oxidant is hydrogen peroxide.

11. A process as claimed in claim 1 comprising an E stage, wherein the pulp is bleached in the E stage in the presence of a catalyst at a pH greater than 8, without substantially increasing the copper number.

## Patentansprüche

1. Verfahren zur Herstellung einer Zusammensetzung zur Umwandlung in eine Lyocellfaser, wobei das Verfahren umfasst:
Zusammenbringen eines Zellstoffs umfassend Zellulose und mindestens 7% Hemizellulose mit einem Oxidationsmittel und einem Katalysator zum Katalysieren der Verringerung des Polymerisationsgrades der Zellulose für eine Zeitdauer, die ausreicht, um den mittleren Polymerisationsgrad der Zellulose bei einem pH-Wert größer als 8 zu verringern, wobei das Verfahren abläuft, ohne den Hemizellulosegehalt des Zellstoffs wesentlich zu verringern und ohne die Kupferzahl des Zellstoffs wesentlich zu erhöhen.

2. Verfahren nach Anspruch 1, wobei der Katalysator ein Metallion aus Fe(II), Fe(III), Mn(II), Cu(II), Cu(I), Co(II), Co(III) und/ oder Ni(II), Salze hiervon oder irgendeine Kombination derselben umfasst.

3. Verfahren nach Anspruch 1 oder 2, wobei die Menge des Oxidationsmittels 1 bis 4% bezogen auf das Gewicht des Zellstoffs beträgt.

4. Verfahren nach irgendeinem der Ansprüche 1 bis 3, wobei die Temperatur während der Verringerung des Polymerisationsgrades 50 bis 100°C beträgt.

5. Verfahren nach irgendeinem der Ansprüche 1 bis 4, ferner umfassend die Zugabe eines Komplexbildners.

6. Verfahren nach Anspruch 5, wobei der Komplexbildner Aminopolycarbonsäure (APCA), Ethylendiamintetraessigsäure (EDTA), Diethylentriaminpentaessigsäure (DTPA), Nitrilotriessigsäure (NTA), Phosphonsäure, Ethylendiamintetra(methylenphosphonsäure) (EDTMP), Diethylentriaminpenta(methylenphosphonsäure) (DTPMP) und/oder Nitrolotris(methylenphosphonsäure) (NTMP), eine Polycarbonsäure, ein Gluconat, ein Zitrat, ein Polyacrylat, ein Polyaspartat oder irgendeine Kombination derselben ist.

7. Verfahren nach Anspruch 5 oder 6, wobei die Menge des Komplexbildners etwa 0,1% bezogen auf das Gewicht des Zellstoffs beträgt.

8. Verfahren nach irgendeinem der Ansprüche 1 bis 7, wobei die Verringerung des Polymerisationsgrades 20 bis 40% beträgt.

9. Verfahren nach irgendeinem der Ansprüche 1 bis 8, wobei die Zeitdauer mindestens 60 Minuten beträgt.

10. Verfahren nach irgendeinem der Ansprüche 1 bis 9, wobei das Oxidationsmittel Wasserstoffperoxid ist.

11. Verfahren nach Anspruch 1, umfassend eine E-Stufe, wobei der Zellstoff in der E-Stufe in Gegenwart eines Katalysators bei einem pH-Wert größer als 8 gebleicht wird, ohne die Kupferzahl wesentlich zu erhöhen.

## Revendications

1. Procédé pour la préparation d'une composition pour la conversion en une fibre Lyocell, ledit procédé comprenant :
la mise en contact d'une pâte comprenant de la cellulose et au moins 7 % d'hémicellulose avec un oxydant et un catalyseur pour catalyser la réduction du degré de polymérisation de la cellulose pendant une période de temps suffisante pour réduire le degré moyen de polymérisation de la cellulose à un pH supérieur à 8, le procédé étant mis en oeuvre sans réduire substantiellement la teneur en hémicellulose de la pâte et sans augmenter substantiellement l'indice de cuivre de la pâte.

2. Procédé suivant la revendication 1, dans lequel le catalyseur comprend un ion métallique d'au moins un de Fe(II), Fe(III), Mn(II), Cu(II), Cu(I), Co(II), Co(III), Ni(II), ses sels, ou n'importe laquelle de leurs associations.

3. Procédé suivant la revendication 1 ou 2, dans lequel la quantité d'oxydant est de 1 % à 4 % sur la base du poids de la pâte.

4. Procédé suivant l'une quelconque des revendications 1 à 3, dans lequel la température au cours de la réduction du D.P. est de 50°C à 100°C.

5. Procédé suivant l'une quelconque des revendications 1 à 4, comprenant en outre l'addition d'un agent chélatant.

6. Procédé suivant la revendication 5, dans lequel l'agent chélatant est au moins un des agents consistant en l'acide aminopolycarboxylique (APCA), l'acide éthylènediaminetétraacétique (EDTA), l'acide diéthylènetriaminepentaacétique (DTPA), l'acide nitriloacétique (NTA), l'acide phosphonique, l'acide éthylènediaminetétraméthylènephosphonique (EDTMP), l'acide diéthylènetriaminepentaméthylènephosphonique (DTPMP), l'acide nitrilotriméthylènephosphonique (NTMP), un acide polycarboxylique, un gluconate, un citrate, un polyacrylate, un polyaspartate ou n'importe laquelle de leurs associations.

7. Procédé suivant la revendication 5 ou la revendication 6, dans lequel la quantité d'agent chélatant est d'environ 0,1 % sur la base du poids de la pâte.

8. Procédé suivant l'une quelconque des revendications 1 à 7, dans lequel la réduction du degré de polymérisation est de 20 % à 40 %.

9. Procédé suivant l'une quelconque des revendications 1 à 8, dans lequel la période de temps est d'au moins 60 minutes.

10. Procédé suivant l'une quelconque des revendications 1 à 9, dans lequel l'oxydant est le peroxyde d'hydrogène.

11. Procédé suivant la revendication 1, comprenant un stade E, dans lequel la pâte est blanchie au stade E en présence d'un catalyseur à un pH supérieur à 8, sans augmenter substantiellement l'indice de cuivre.
